# EUROPÄISCHE PATENTSCHRIFT

(11) **EP 0 774 663 B1**
(45) Veröffentlichungstag und Bekanntmachung des Hinweises auf die Patenterteilung: **20.11.2002**
(21) Anmeldenummer: 96113436.8
(22) Anmeldetag: 22.08.1996
(51) Int. Cl.: G01N 27/64

(54) **Ionen-Mobilitäts-Spektrometer (IMS)**
Ion mobility spectrometer
Spectromètre de mobilité ionique

(30) Priorität: 18.11.1995 DE 19543159
(43) Veröffentlichungstag der Anmeldung: 21.05.1997
(73) Patentinhaber: Bruker BioSpin AG, 8117 Fällanden (CH)
(72) Erfinder: Grossniklaus, Beat, 8173 Neerach (CH); Schett, Oskar, 8610 Uster (CH); Tschopp, Werner, 8127 Forch (CH)
(74) Vertreter: KOHLER SCHMID + PARTNER

(56) Entgegenhaltungen:
- WO-A-93/01485
- WO-A-93/06476
- US-A- 5 080 124
- US-A- 5 162 652
- US-A- 5 345 809
- US-A- 5 455 417

## Beschreibung

Die Erfindung betrifft ein Ionen-Mobilitäts-Spektrometer (IMS) mit einer Meßzelle, bestehend aus einer Meßanordnung und einem Gehäuse, das die Meßanordnung bis auf eine Gaseinlaßvorrichtung nach außen hin gasdicht abschließt, wobei die Gaseinlaßvorrichtung eine im Verhältnis zum Volumen der Meßzelle geringe Menge von außerhalb des Gehäuses befindlichen Meßgas-Molekülen durch eine gelochte Scheibe mit einer Scheibendicke < 1 mm in das Gehäuseinnere strömen läßt, und wobei eine Vorrichtung zur Erzeugung von alternierenden positiven und negativen Druckgradienten über den Löchern der Scheibe auf mindestens einer Seite der gelochten Scheibe vorgesehen ist.

Ein solches Ionen-Mobilitäts-Spektrometer ist beispielsweise bekannt aus der WO 93/01485, wobei dort allerdings keine alternierenden Druckgradienten, sondern die sukzessive Anwendung von entweder negativen oder positiven Druckpulsen auf eine Lochblende mit einem einzigen nadelförmigen zentralen Durchgangsloch mit Durchmesser 0,3 mm vorgeschlagen wird.

Das Ionen-Mobilitäts-Spektrometer ist ein Massenspektrometer, mit dem z. B. chemische Kampfstoffe nachgewiesen werden können. Es arbeitet mit einem Trägergas bei normalem atmosphärischem Umgebungsdruck und benötigt somit kein Hochvakuum. Gemessen wird die Laufzeit, die ionisierte Moleküle benötigen, um eine bestimmte Strecke (Drift-Strecke) zu durchlaufen, die mit einem Trägergas gefüllt ist. Je größer die Mobilität dieser Moleküle, desto kürzer ist die Laufzeit durch das Trägergas. Diese Mobilität ist von der Größe des Moleküls und seinen chemischen Eigenschaften abhängig und erlaubt somit eine Unterscheidung verschieden aufgebauter, ionisierter Moleküle.

Die zu untersuchenden Gase werden zuerst mit Hilfe einer radioaktiven Quelle (in der Regel Beta-Strahler) ionisiert, damit sie anschließend auf der Drift-Strecke mit einem elektrischen Feld beschleunigt werden können. Am Ende der Drift-Strecke prallen sie auf eine Kollektor-Elektrode und werden dort elektrisch entladen und registriert. Die schnellsten Ionen kommen zuerst an, die langsamsten am Schluß. Dadurch entsteht ein Zeitspektrum, ähnlich wie beim "Time of Flight"-Massenspektrometer (TOF-Massenspektrometer).

Bei den meisten IMS-Apparaturen erfolgt die Zuführung des Meßgases durch eine semipermeable Membrane, wie beispielsweise in der US-PS 4,311,669 beschrieben.

Bekannt ist die Verwendung einer Silikonmembrane (DMS) von ca. 5 bis 50 µm Dicke, die von Natur aus geringfügig gasdurchlässig ist. Sie läßt verschiedenartige Moleküle verschieden gut durch und besitzt somit auch noch die Eigenschaft eines Molekularfilters.

Die Silikonmembrane wirkt als molekulare Diffusionspumpe, d. h. der Transport der Moleküle durch die Membrane erfolgt mit Hilfe des Diffusionseffektes. Dieser ist vom Konzentrationsgefälle der Moleküle zwischen der einen und der anderen Seite der Membrane abhängig. Ist die Konzentration auf beiden Seiten gleich groß, dann verschwindet der Diffusionsaustausch. Mit anderen Worten: Solange ein Diffusionsaustausch stattfindet, kann die Konzentration auf der Innenseite der Membrane nie eine höhere Konzentration als auf der Außenseite erreichen. Dadurch verliert man an Meßempfindlichkeit, was sich sehr nachteilig auswirkt.

Ein weiterer Nachteil ergibt sich durch die Tatsache, daß die Silikonmembrane infolge ihrer Porosität wie ein Schwamm wirkt, der Moleküle aufnimmt und im Molekulargewebe festhält.

Eine Silikonmembrane kann mit einem sehr feinen Lochsieb verglichen werden. Die Funktion der Löcher übernehmen die Zwischenräume des molekularen Gewebes des Silikons. Die Löcher sind deshalb sehr zahlreich, sehr klein und zudem noch labyrinthmäßig verzweigt, sodaß die Löcher sehr lang werden. Dies hat zur Folge, daß die Silikonmembrane nicht nur als sehr feines Lochsieb wirkt, sondern auch als Schwamm, in welchem Moleküle im Labyrinth von Zwischenräumen hängen bleiben und nur sehr mühsam, vorzugsweise durch einen Reinigungsprozeß, wieder entfernt werden können.

Der zeitaufwendige Reinigungsprozeß der verunreinigten Silikonmembrane hat zur Folge, daß die Erholzeit, d. h. die Zeit, bis wieder eine neue Messung durchgeführt werden kann, sehr lang wird, nämlich in der Größenordnung von 20 Sekunden bis mehreren Minuten. Dieser Nachteil ist von großer Bedeutung. Daß man solche Membranen aber trotzdem verwendet liegt daran, daß ihre Siebwirkung sehr gut ist (Molekularsieb!), und daß sie, im Vergleich zu einer Lochblende, einen besseren hermetischen Abschluß des Gehäuses darstellen.

Als Alternative zu einer Gaseinlaßvorrichtung mit Silikonmembrane wurde in jüngster Zeit eine Lochblende mit nadelförmigem, zentralem Durchgangsloch entwickelt, auf die von der Geräteinnenseite her negative Druckimpulse einwirken. Diese Idee wurde zum ersten Mal in der eingangs zitierten WO 93/01485 vorgeschlagen und auch in der WO 93/06476 beschrieben. Durch das Anbringen einer nadelförmigen Lochblende an einem sonst hermetisch abgeschlossenen Gehäuse, und durch die Erzeugung von negativen Druckimpulsen innerhalb des Gehäuses, kann eine dosierbare Menge des Meßgases von außen durch die Blende in den Reaktionsraum der IMS-Meßanordnung geführt werden. Der negative Druckimpuls muß genügend groß sein, sodaß das Meßgas in Form eines laminaren Strahls aus der Blende strömt und am Ende in einen stationären Wirbelring übergeht. Durch einen vorsichtigen Abgleich des Durchmessers der Lochblende sowie der Intensität und der Dauer des negativen Druckimpulses kann erreicht werden, daß der Wirbelring bis in die Ionisationskammer befördert wird, um dort sofort ionisiert zu werden.

Mit Hilfe dieses neuen Einlaßmechanismus kann nun die Verwendung einer molekularen Diffusionspumpe, z. B. in Form einer Silikonmembrane, mit all ihren Nachteilen vermieden werden. Die nadelförmige Lochblende stellt allerdings eine direkte Verbindung nach außen dar und verhindert einen vollständigen hermetischen Abschluß der Meßanordnung. Da jedoch die bekannte Lochblende nur nadelförmig ist, kann, solange die negativen Druckimpulse ausbleiben, der Außenbereich wenig Einfluß auf den Innenbereich nehmen. Außerdem stellt auch eine Silikonmembrane keinen echten hermetischen Abschluß dar, denn sie muß ja semipermeabel sein.

Ein wesentlicher Nachteil der bekannten Gaseinlaßvorrichtung mit einer kleinen nadelförmigen Lochblende unter dem Einfluß negativer Druckimpulse innerhalb der Meßzelle besteht darin, daß die Vorrichtung äußerst umständlich zu justieren ist und sehr empfindlich auf geringste Geometrieänderungen reagiert, da sie nur dann befriedigend arbeitet, wenn genau definierte Strömungsverhältnisse vorliegen. Aufgrund des sehr kleinen Düsenlochs und der wegen der Strömungs-Randbedingungen in ihrer Stärke nach oben hin begrenzten negativen Druckimpulse kommt bei der bekannten Gaseinlaßvorrichtung nur ein relativ uneffektiver Massentransport zustande. Da nach dem Abklingen eines negativen Druckimpulses eine nachfolgende Nachströmzeit eines Trägergases im Innern der Meßzelle abgewartet werden muß, wird auch von daher der Meßgas-Eintrag in die Meßzelle mit der bekannten Vorrichtung sehr begrenzt sein, was insgesamt zu einer geringeren Empfindlichkeit der IMS-Meßanordnung führt.

Aufgabe der vorliegenden Erfindung ist demgegenüber, ein Ionen-Mobilitäts-Spektrometer mit den eingangs geschilderten Merkmalen vorzustellen, das einerseits eine erheblich geringere Erholzeit nach jedem Meßstoß als eine IMS-Apparatur mit Silikonmembrane als Gaseinlaßvorrichtung benötigt, das andererseits aber wesentlich robuster in seinem Betriebsverhalten und einfacher zu justieren ist als eine IMS-Meßanordnung mit nadelförmiger Lochblende unter dem Einfluß negativer Druckimpulse und das zudem einen höheren Meßgas-Eintrag und damit eine höhere Empfindlichkeit gegenüber den bekannten Anordnungen aufweist.

Erfindungsgemäß wird diese Aufgabe dadurch gelöst, daß die gelochte Scheibe aus einem nicht-porösen Material mit einer Scheibendicke zwischen 10 µm und 1 mm besteht und eine Vielzahl von durchgängigen Löchern, vorzugsweise zwischen 10 und 100 Löchern pro cm² aufweist, die vorzugsweise einen Durchmesser zwischen 10 µm und 20 µm haben.

Da die erfindungsgemäß verwendete Scheibe aus einem nicht-porösen Material besteht, in welches eine Vielzahl von kurzen, nadelförmigen Durchgangslöchern eingebracht ist, ergibt sich das Problem eines schwammartigen Verhaltens wie bei einer Silkonmembrane von vornherein nicht, und die Anordnung ist nach jedem der alternierenden Druckstöße sofort wieder meßbereit. Zwar besitzt die gelochte Scheibe nicht die hohe Siebwirkung und die guten hermetischen Abschlußeigenschaften einer Silikonmembrane, jedoch zeigen Experimente, daß diese leichten Nachteile bei der erfindungsgemäßen IMS-Apparatur in den allermeisten Anwendungsfällen von minderer Bedeutung sind, wohingegen die Vorteile bei weitem überwiegen.

Durch die periodischen positiven und negativen Druckschwankungen über den Löchern der Scheibe und den dadurch entstehenden alternierenden positiven und negativen Druckgradienten werden die Gasmoleküle in der Nähe der beiden Oberflächen der gelochten Scheibe durch die Löcher hin und her befördert und zugleich verwirbelt. Dadurch findet eine sehr starke Durchmischung zwischen den Gasmolekülen auf beiden Seiten der Scheibe statt, die bereits nach kürzester Zeit zu einem Ausgleich der Konzentration der Gasmoleküle im Bereich der Außen- und Innenseite der Scheibe führt. Auf diese Weise ist gegenüber der Diffusion durch eine semipermeable Membran die Konzentration der Gasmoleküle im Innern der Meßzelle bedeutend erhöht, wodurch auch die Meßempfindlichkeit wesentlich höher ist.

Gegenüber einer Gaseinlaßvorrichtung mit nadelförmiger Lochblende und der Anwendung von negativen Druckimpulsen im Innern der Meßzelle, wie sie aus der oben zitierten WO 93/06476 bekannt ist, ist die erfindungsgemäße Anordnung erheblich robuster und bedarf keinerlei Justage der Gaseinlaßvorrichtung. Außerdem ist durch die Verwendung von alternierenden positiven und negativen Druckgradienten der Meßgas-Eintrag und damit die Effektivität und Empfindlichkeit der Anordnung wesentlich höher.

Bevorzugt ist eine Ausführungsform des erfindungsgemäßen Ionen-Mobilitäts-Spektrometers, bei der die gelochte Scheibe aus Metall, vorzugsweise aus Metallfolie oder dünnem Blech, beispielsweise Edelstahlblech besteht. Anstelle von Metall kann aber auch jedes andere nicht-poröse Material verwendet werden, wobei aber darauf geachtet werden muß, daß die Oberflächen der Scheibe keine Ausdünstungen abgeben, wie dies beispielsweise bei einigen Kunststoffen der Fall wäre, bei deren Verwendung die Meßempfindlichkeit der Anordnung erheblich beeinträchtigt werden würde.

Bei Ausführungsformen der Erfindung kann die gelochte Scheibe starr aufgebaut sein, was den Vorteil einer besonders großen mechanischen Robustheit und eines einfachen, unaufwendigen Einbaus in die Apparatur hat.

Bei einer bevorzugten Ausführungsform des erfindungsgemäßen Ionen-Mobilitäts-Spektrometers ist jedoch vorgesehen, daß die gelochte Scheibe eine längs ihres umlaufenden Randes gasdicht mit dem Gehäuse verbundene, schwingungsfähige Membrane ist, und daß die Vorrichtung zur Erzeugung von alternierenden Druckgradienten eine Einrichtung zur aktiven Schwingungsanregung der Membrane umfaßt. Durch die Eigenbewegung der Membrane wird eine noch bessere Durchmischung der Gasmoleküle auf beiden Seiten der gelochten Scheibe erreicht, wodurch eine weitere Konzentrationserhöhung der Moleküle im Innern der Meßanordnung und damit eine weitere Steigerung der Empfindlichkeit resultiert.

Mechanisch besonders robust ist eine Ausführungsform, bei der die Vorrichtung zur Erzeugung von alternierenden Druckgradienten einen piezoelektrischen Oszillator zur aktiven Schwingungsanregung der gelochten Scheibe umfaßt. Ein solcher piezoelektrischer Oszillator ist in vielen Variationen im Handel erhältlich und sehr einfach auch in ein bereits vorhandenes Spektrometer einbaubar.

Bei einer anderen vorteilhaften Ausführungsform umfaßt die Einrichtung zur aktiven Schwingungsanregung der Membrane einen elektromagnetischen Oszillator.

Eine bevorzugte Weiterbildung dieser Ausführungsform zeichnet sich dadurch aus, daß die Membrane vorzugsweise in ihrem zentralen Bereich einen permanentmagnetischen Abschnitt, beispielsweise eine ein- oder beidseitig auf die Membrane fest aufgebrachte Schicht aus ferritischem Material, aufweist, und daß eine vorzugsweise fest mit dem Gehäuse verbundene elektrische Spule vorgesehen ist, die mit einem elektrischen Wechselstrom beschickt werden kann und ein magnetisches Wechselfeld erzeugt, welches die Membrane zu Schwingungen anregt.

Besonders bevorzugt ist eine Weiterbildung, bei der die elektrische Spule ein magnetisches Wechselfeld im kHz-Bereich erzeugen kann, das am Ort des permanentmagnetischen Abschnitts der Membrane einen Feldgradienten besitzt.

Bei einer alternativen Ausführungsform des erfindungsgemäßen Ionen-Mobilitäts-Sprektrometers arbeitet die Einrichtung zur aktiven Schwingungsanregung der Membrane auf pneumatischer Basis.

Dies ist besonders einfach dadurch zu erreichen, daß eine alternierend arbeitende Pumpe, vorzugsweise eine Membranpumpe, zur Umwälzung eines sich im Innern des Gehäuses befindlichen Trägergases vorgesehen ist, und daß die Pumpe gleichzeitig zur pneumatischen Schwingungsanregung der Membrane dient. Da bei vielen herkömmlichen IMS-Anordnungen bereits eine derartige Membranpumpe zur Umwälzung des Trägergases vorhanden ist, braucht bei dieser bevorzugten Ausführungsform keine eigens anzufertigende Einrichtung zur aktiven Schwingungsanregung der Membrane eingebaut zu werden. Daher ist diese Ausführungsform auch aus wirtschaftlichen Aspekten besonders günstig.

Vorzugsweise erzeugt die Membranpumpe alternierende Druckgradienten im Frequenzbereich zwischen 10 Hz und 100 Hz, insbesondere in einem Bereich zwischen 30 Hz und 40 Hz, was für eine optimale Durchmischung der Molekülkonzentration auf beiden Seiten der Membrane völlig ausreichend ist.

Eine besonders bevorzugte Ausführungsform des erfindungsgemäßen Ionen-Mobilitäts-Spektrometers zeichnet sich dadurch aus, daß das im Innern des Gehäuses vorgesehene Trägergas ständig umgewälzt wird, und daß der Gasstrom des umgewälzten Trägergases so gelenkt wird, daß das Trägergas die durch die gelochte Scheibe ins Innere des Gehäuses eingedrungenen Meßgas-Moleküle von der gelochten Scheibe in den Reaktionsraum der Meßzelle befördert. Dadurch wird die Meßgas-Konzentration auf der Innenseite der gelochten Scheibe ständig abgebaut und durch frisches, von außen eindringendes Meßgas ersetzt, was die Empfindlichkeit der Anordnung noch weiter erhöht.

Vorteilhaft für die Realisierung der Erfindung ist eine dünnwandige Scheibe mit einer Scheibendicke zwischen 10 µm und 1 mm aus einem nicht-porösen Material mit einer Vielzahl von durchgängigen Löchern, vorzugsweise zwischen 10 und 100 Löchern pro cm², die einen Durchmesser zwischen 5 µm und 50 um, vorzugsweise zwischen 10 µm und 20 µm aufweisen, zur Verwendung in einer Gaseinlaßvorrichtung eines erfindungsgemäßen Ionen-Mobilitäts-Spektrometers der oben beschriebenen Art.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: den prinzipiellen Aufbau einer erfindungsgemäßen IMS-Meßanordnung mit schematisch dargestellter Gaseinlaßvorrichtung mit gelochter Scheibe;
- Fig. 2: eine vergrößerte schematische Darstellung einer Gaseinlaßvorrichtung mit elektromagnetischer Anregung der Membrane - links in Schnittansicht und rechts in Draufsicht -;
- Fig. 3a: die Wirkungsweise einer Gaseinlaßvorrichtung mit gelochter Scheibe ohne Schwingung und ohne periodische Druckschwankung im Innern des Gehäuses;
- Fig. 3b: wie Fig. 3a mit Schwingung der gelochten Scheibe;
- Fig. 3c: wie Fig. 3b mit Absaugung des eingeströmten Meßgases durch umgewälztes Trägergas; und
- Fig. 4: den zeitlichen Verlauf des gemessenen Ionenstroms in pA für eine IMS-Apparatur mit einem erfindungsgemäßen Gaseinlaß mit gelochter Scheibe (A) im Vergleich zu einem herkömmlichen Gaseinlaß mit Silikonmembrane (B).

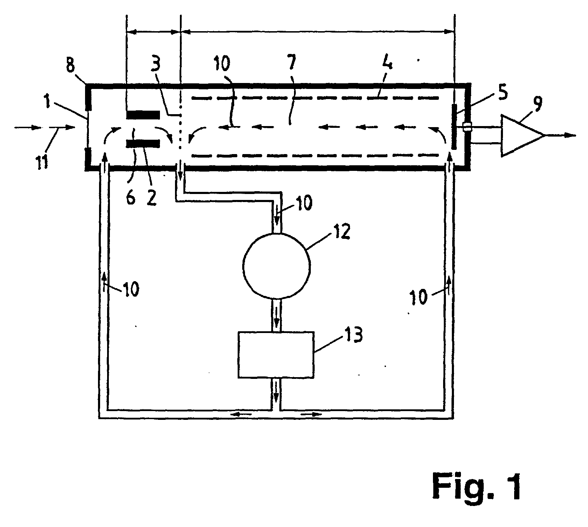

Der in Fig. 1 gezeigte prinzipielle Aufbau einer erfindungsgemäßen IMS-Meßanordnung läßt in einem schematischen Schnitt ein Gehäuse 8 erkennen, das die IMS-Meßanordnung nahezu hermetisch gegen die äußere Umgebung abschließt. Die einzige Verbindung nach außen führt durch eine Gaseinlaßvorrichtung mit einer gelochten Scheibe 1, die aus nicht-porösem Material aufgebaut ist, eine Scheibendicke von 10 µm bis 1 mm sowie eine Vielzahl von durchgängigen Löchern, vorzugsweise zwischen 10 und 100 Löchern pro cm² aufweist, wobei die Löcher einen Durchmesser zwischen 5 µm und 50 µm, vorzugsweise zwischen 10 µm und 20 µm haben.

Im Innern des Gehäuses 8 ist im Anschluß an die Gaseinlaßvorrichtung eine radioaktive Quelle 2 vorgesehen, die sich in einem Reaktionsraum 6 auf einem Potential von beispielsweise 2,2 kV befindet. In der Regel wird die radioaktive Quelle 2 einen Beta-Strahler (z. B. ⁶³Ni) aufweisen. Die radioaktive Quelle 2 hat die Aufgabe, das durch die gelochte Scheibe 1 in das Innere der Gehäuse eintretende Meßgas 11, das die eigentliche Meßprobe der IMS-Apparatur darstellt und das im allgemeinen hochmolekulare chemische Stoffe wie beispielsweise Kampfstoffe enthalten kann, zu ionisieren.

Im gezeigten Beispiel sind die Potentiale der IMS-Meßanordnung so gewählt, daß positive Ionen detektiert werden können. Um negative Ionen zu detektieren, muß lediglich die Polarität der Spannungen umgeschaltet werden.

Im Anschluß an die radioaktive Quelle 2 befindet sich ein Schaltgitter 3 in der Meßzelle, das im gezeigten Beispiel auf einem Potential von +1,6 kV liegt und als Tor zwischen dem Reaktionsraum 6 und einem sich daran anschließenden Drift-Raum 7 wirkt. Das Schaltgitter 3 kontrolliert den Durchgang der ionisierten Moleküle. Es kann aus zwei getrennten Hälften bestehen, die als parallel ausgerichtete Gitterstäbe kammartig ineinandergreifen und (im gezeigten Beispiel) auf einem mittleren Potential von 1,6 kV liegen. Wird über beiden Hälften des Schaltgitters eine Differenzspannung von mehr als 100 V angelegt, so wird das elektrische Feld lokal verzerrt, die Ionen werden am Schaltgitter 3 entladen, und das Schaltgitter 3 sperrt den Durchgang von Ionen in den Drift-Raum 7. Ist die Differenzspannung zwischen den beiden Gitterhälften kleiner als 100 V (üblicherweise 0 V), dann ist das Gitter für die Meß-Ionen durchlässig.

In dem an das Schaltgitter 3 anschließenden Drift-Raum 7 herrscht ein elektrisches Gradientenfeld, das von um die Apparaturachse herum angeordneten Feldelektroden 4 erzeugt wird. Die Feldelektroden 4 besitzen unterschiedliche Spannungspotentiale, die im dargestellten Fall gleichmäßig zwischen 1,6 kV und 0 V verteilt sind. Das auf diese Weise im Drift-Raum 7 erzeugte elektrische Gradientenfeld beschleunigt positive Ionen vor dem Schaltgitter 3 zu einer am Ende des Drift-Raums 7 angeordneten Kollektorelektrode 5. Wie bereits erwähnt, muß zur Messung von negativen Ionen lediglich die Polarität aller Spannungspotentiale umgeschaltet werden.

Auf der Kollektorelektrode 5 werden die von der radioaktiven Quelle 2 durch das Schaltgitter 3 und den anschließenden Drift-Raum 7 mit Hilfe des elektrischen Gradientenfelds von den Feldelektroden 4 beschleunigten Meßgas-Ionen aufgefangen und deren elektrische Ladung neutralisiert. Dadurch wird ein elektrisches Signal erzeugt, das in einem Vorverstärker 9 verstärkt und anschließend analysiert wird. Das Signal kann aber zusätzlich noch in weiteren elektronischen Einheiten digitalisiert, in einem Mikroprozessor als Zeitspektrum erfaßt und anschließend verfeinert analysiert werden.

Durch periodisches Öffnen und Schließen des Schaltgitters 3 werden wiederholt Meßgas-Ionen in den Drift-Raum geschickt, durch das Trägergas 10 hindurch beschleunigt und am Ende der Laufstrecke an der Kollektorelektrode 5 aufgefangen. Dabei dient das Trägergas 10 als Medium, in welchem die Mobilität der ionisierten Moleküle gemessen wird. Der Unterschied der Laufzeiten von verschiedenen Meßgas-Ionen führt zu einem Zeitspektrum, dessen Auflösung um so größer ist, je kürzer die Öffnungszeit des Schaltgitters 3 ist.

Mit Hilfe einer Pumpe 12, im allgemeinen einer Membranpumpe, wird das Trägergas 10 in der Meßzelle umgewälzt und durch ein Filter 13 geführt. Auf diese Weise wird das Trägergas 10 gereinigt und entfeuchtet. Indem das Trägergas 10 ständig mit Hilfe der Membranpumpe 12 umgewälzt und durch das Filter 13 geführt wird, kann eine weitere wichtige Aufgabe erfüllt werden, nämlich das Trocknen des Trägergases. Die von außen über die Gaseinlaßvorrichtung mit der gelochten Scheibe 1 ins Innere des Meßzelle gelangenden Wassermoleküle werden auf diese Weise zumindest teilweise im Filter 13 absorbiert. Außerdem absorbiert das Filter 13 auch die an der Kollektorelektrode 5 neutralisierten ionisierten Meßmoleküle des Meßgases 11, bei dem es sich, wie oben erwähnt, in vielen wichtigen Anwendungsfällen um aggressive Chemikalien oder chemische Kampfstoffe handeln kann, sodaß es sich empfiehlt, das kontaminierte Filter 13 in regelmäßigen Abständen auszuwechseln.

Eine zentrale Rolle in der Gaseinlaßvorrichtung des erfindungsgemäßen Ionen-Mobilitäts-Spektrometers spielt die gelochte Scheibe 1. Sie schließt den geschlossenen Innenraum des Gehäuses 8 nach außen hin ab, besitzt aber eine direkte Verbindung zum Außenraum. Dank der sehr kleinen Öffnungsquerschnitte der nadelförmigen Löcher entsteht jedoch eine nahezu hermetische Trennung von innen nach außen. Die chemischen Reaktionen im Innern der Meßzelle werden deshalb von außen so gut wie nicht beeinflußt. Zudem wirkt auch die Scheibe 1 als druckausgleichendes Element, welches verhindert, daß kurzfristige Druckschwankungen im Außenraum die Messung beeinflussen.

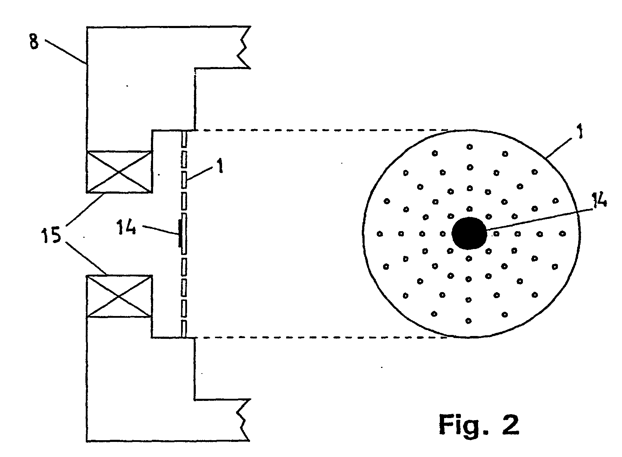

Um die notwendige Verbindung mit dem Außenbereich wesentlich zu verbessern, ist bei der erfindungsgemäßen IMS-Anordnung eine Vorrichtung zur Erzeugung von alternierenden positiven und negativen Druckgradienten über den Löchern der gelochten Scheibe 1 vorgesehen. In Fig. 2 enthält die auf der rechten Seite der Figur in Draufsicht dargestellte gelochte Scheibe 1 in ihrem zentralen Bereich eine aufgedampfte oder in sonstiger Form aufgebrachte permanentmagnetische Schicht 14, die beispielsweise ferritisches Material enthält, und die fest mit der gelochten Scheibe 1 verbunden ist. Eine elektrische Spule 15 erzeugt ein magnetisches Wechselfeld im kHz-Bereich, das am Ort der magnetischen Schicht 14 einen starken Feldgradienten besitzt. Dadurch wird eine zeitlich veränderliche Kraftwirkung über die Schicht 14 auf die gelochte Scheibe 1 ausgeübt, welche die letztere zum Schwingen bringt. Um die Eigenschwingfähigkeit der gelochten Scheibe 1 zu erhöhen, ist im vorliegenden Beispiel die Scheibe 1 als schwingungsfähige Membrane ausgebildet, die längs ihres umlaufenden Randes gasdicht mit dem Gehäuse 8 verbunden ist.

Bei einer alternativen (oder auch zusätzlichen) aktiven Anregung können die alternierenden positiven und negativen Druckschwankungen auch pneumatisch erzeugt werden. Beim oben beschriebenen Ausführungsbeispiel kann dies ohne zusätzlichen technischen Aufwand dadurch erreicht werden, daß als Umwälzpumpe 12 eine Membranpumpe verwendet wird, die von Natur aus ohnehin positive und negative Druckstöße des umgewälzten Trägergases 10 (in der Regel im Frequenzbereich zwischen 30 und 40 Hz) erzeugt, welche bereits genügen, um eine als Membrane ausgebildete gelochte Scheibe 1 in Schwingungen zu versetzen. Wenn das Trägergas 10 an der Innenseite der gelochten Scheibe 1 vorbeigelenkt wird, wird gleichzeitig beim Umwälzen des Trägergases 10 die Konzentration des ins Innere des Gehäuses 8 eingedrungenen Meßgases 11 an der Innenseite der gelochten Scheibe 1 ständig reduziert, sodaß frisches Meßgas 11 von außen nachdringen kann.

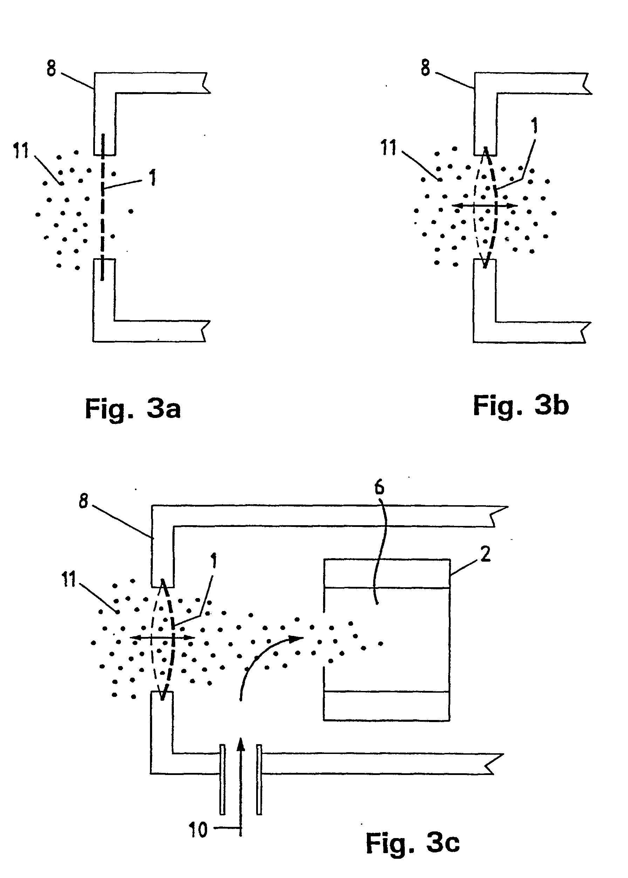

In den Fign. 3a bis 3c ist die Wirkungsweise einer schwingungsfähigen, gelochten Scheibe 1 in Form einer Membrane dargestellt. Fig. 3a zeigt die Membrane in stationärem Zustand. Da lediglich der Diffusionseffekt wirksam ist, gelangen nur wenige Moleküle des Meßgases 11 durch die gelochte Scheibe 1 von außen ins Innere des Gehäuses 8. Sobald aber die Membrane schwingt, entstehen beidseitig positive und negative Druckgradienten über den Löchern der Membrane, welche die Gasmoleküle durch die Löcher hin und her befördern und zugleich durchwirbeln. Auf diese Weise entsteht eine gleichmäßige Durchmischung der Moleküle auf beiden Seiten der gelochten Scheibe 1, wie in Fig. 3b deutlich zu erkennen ist. Dadurch ergibt sich auch eine starke Ansammlung von Molekülen des Meßgases 11 im Innern des Gehäuses 8. Diese Moleküle werden nun, wie in Fig. 3c gut zu erkennen ist, durch den Strom des zirkulierenden Trägergases 10 (teilweise aber auch durch bloße Diffusion) in den Reaktionsraum 6 und insbesondere ins Innere der radioaktiven Quelle 2 mitgenommen, wo sie dann möglichst zerstörungsfrei ionisiert werden.

Anstelle einer aktiven Schwingungsanregung der gelochten Scheibe 1 könnte die letztere aber auch starr ausgebildet sein, wobei beispielsweise pneumatisch erzeugte periodisch alternierende positive und negative Druckschwankungen zwischen beiden Seite der gelochten Scheibe hervorgerufen werden könnten. Auch dadurch würde die gewünschte Durchmischung der Gasmoleküle auf beiden Seiten der Scheibe und damit eine Konzentrationserhöhung der zu messenden Moleküle auf der Innenseite der Scheibe mit der Folge der Erhöhung der Empfindlichkeit der IMS-Apparatur erreicht werden. Bei Ausbildung der gelochten Scheibe 1 als schwingungsfähige Membrane kann aber eine noch bessere Durchmischung der Gasmoleküle auf beiden Seiten der Membrane erfolgen, was zu einer weiteren Steigerung der Empfindlichkeit der Apparatur führt.

Die erfindungsgemäße Idee der Durchmischung von Meßgas-Molekülen auf beiden Seiten der schwingungsfähigen Membrane in der Gaseinlaßvorrichtung kann aber auch unter Verwendung einer herkömmlichen Silikonmembrane realisiert werden. Vorteilhaft dabei ist vor allem der nahezu hermetische Abschluß des Gehäuses 8 nach außen hin. Als nachteilig wäre aber das schwammartige Verhalten der Silikonmembrane in Kauf zu nehmen, wobei aber der oben geschilderte Vorteil einer Steigerung der Empfindlichkeit durch Konzentrationserhöhung der Meßgas-Moleküle dennoch bestehen bleibt, allerdings in beschränkterem Maß.

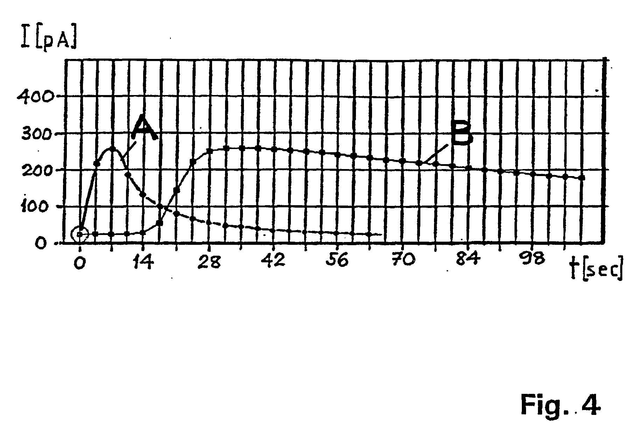

Bei Verwendung einer gelochten Scheibe 1 aus nicht-porösem Material hingegen entsteht das Problem einer permanenten Verunreinigung der Scheibe durch das schwammartige Verhalten das Aufsaugen und spätere Abdampfen von Meßgas-Molekülen von vornherein nicht, sodaß eine Vielzahl von Messungen sehr schnell hintereinander durchgeführt werden kann. Fig. 4 zeigt im Vergleich den Ionenstrom in pA als Funktion der Zeit in Sekunden bei Verwendung einer gelochten Membrane (A) oder einer herkömmlichen Silikonmembrane (B). Wie man sieht, ist die Erholzeit bei Verwendung einer gelochten, nicht-porösen Membrane im Vergleich zu einer Silikonmembrane ganz erheblich kürzer, was natürlich zu einer entsprechenden Verkürzung aufeinanderfolgender Meßintervalle und damit zu einer Erhöhung der Signalintensität und des Auflösungsvermögens führt.

## Patentansprüche

1. Ionen-Mobilitäts-Spektrometer (IMS) mit einer Meßzelle bestehend aus einer Meßanordnung und einem Gehäuse (8), das die Meßanordnung bis auf eine Gaseinlaßvorrichtung nach außen hin gasdicht abschließt, wobei die Gaseinlaßvorrichtung eine im Verhältnis zum Volumen der Meßzelle geringe Menge von außerhalb des Gehäuses (8) befindlichen Meßgas-Molekülen (11) durch eine gelochte Scheibe (1) mit einer Scheibendicke ≤ 1 mm in das Gehäuseinnere strömen läßt, und wobei eine Vorrichtung zur Erzeugung von alternierenden positiven und negativen Druckgradienten über den Löchern der Scheibe (1) auf mindestens einer Seite der gelochten Scheibe (1) vorgesehen ist,
**dadurch gekennzeichnet,**
**daß** die gelochte Scheibe (1) aus einem nicht-porösen Material mit einer Scheibendicke zwischen 10 µm und 1 mm besteht und eine Vielzahl von durchgängigen Löchern, vorzugsweise zwischen 10 und 100 Löchern pro cm² aufweist, die einen Durchmesser zwischen 5 µm und 50 µm, vorzugsweise zwischen 10 µm und 20 µm haben.

2. Ionen-Mobilitäts-Spektrometer nach Anspruch 1, **dadurch gekennzeichnet, daß** die gelochte Scheibe (1) aus Metall, vorzugsweise aus Metallfolie oder dünnem Blech, beispielsweise Edelstahlblech besteht.

3. Ionen-Mobilitäts-Spektrometer nach einem der vorhergehenden Ansprüche, **dadurch gekennzeichnet, daß** die Vorrichtung zur Erzeugung von alternierenden Druckgradienten einen piezoelektrischen Oszillator zur aktiven Schwingungsanregung der gelochten Scheibe (1) umfaßt.

4. Ionen-Mobilitäts-Spektrometer nach einem der vorhergehenden Ansprüche, **dadurch gekennzeichnet, daß** die gelochte Scheibe (1) starr aufgebaut ist.

5. Ionen-Mobilitäts-Spektrometer nach einem der Ansprüche 1 bis 3, **dadurch gekennzeichnet, daß** die gelochte Scheibe (1) eine längs ihres umlaufenden Randes gasdicht mit dem Gehäuse (8) verbundene, schwingungsfähige Membrane ist, und daß die Vorrichtung zur Erzeugung von alternierenden Druckgradienten eine Einrichtung zur aktiven Schwingungsanregung der Membrane umfaßt.

6. Ionen-Mobilitäts-Spektrometer nach Anspruch 5, **dadurch gekennzeichnet, daß** die Einrichtung zur aktiven Schwingungsanregung der Membrane einen elektromagnetischen Oszillator umfaßt.

7. Ionen-Mobilitäts-Spektrometer nach Anspruch 6, **dadurch gekennzeichnet, daß** die Membrane vorzugsweise in ihrem zentralen Bereich einen ferromagnetischen Abschnitt, beispielsweise eine einseitig oder beidseitig auf die Membrane fest aufgebrachte Schicht (14) aus ferritischem Material, aufweist, und daß eine vorzugsweise fest mit dem Gehäuse (8) verbundene elektrische Spule (15) vorgesehen ist, die mit einem elektrischen Wechselstrom beschickt werden kann und ein magnetisches Wechselfeld erzeugt, welches die Membrane zu Schwingungen anregt.

8. Ionen-Mobilitäts-Spektrometer nach Anspruch 7, **dadurch gekennzeichnet, daß** die elektrische Spule (15) ein magnetisches Wechselfeld im kHz-Bereich erzeugen kann, das am Ort des ferromagnetischen Abschnittes der Membrane einen Feldgradienten besitzt.

9. Ionen-Mobilitäts-Spektrometer nach Anspruch 5, **dadurch gekennzeichnet, daß** die Einrichtung zur aktiven Schwingungsanregung der Membrane auf pneumatischer Basis arbeitet.

10. Ionen-Mobilitäts-Spektrometer nach Anspruch 9, **dadurch gekennzeichnet, daß** eine alternierend arbeitende Pumpe (12), vorzugsweise eine Membranpumpe zur Umwälzung eines im Inneren des Gehäuses befindlichen Trägergases (10) vorgesehen ist, und daß die Pumpe (12) gleichzeitig zur pneumatischen Schwingungsanregung der Membrane dient.

11. Ionen-Mobilitäts-Spektrometer nach Anspruch 10, **dadurch gekennzeichnet, daß** die Pumpe (12) alternierende Druckgradienten im Frequenzbereich zwischen 10 Hz und 100 Hz, vorzugsweise zwischen 30 Hz und 40 Hz erzeugen kann.

12. Ionen-Mobilitäts-Spektrometer nach einem der vorhergehenden Ansprüche, **dadurch gekennzeichnet, daß** im Innern des Gehäuses (8) vorgesehenes Trägergas (10) ständig umgewälzt wird, und daß der Gasstrom des umgewälzten Trägergases (10) so gelenkt wird, daß das Trägergas (10) die durch die gelochte Scheibe (1) ins Innere des Gehäuses (8) eingedrungenen Meßgas-Moleküle (11) von der gelochten Scheibe (1) in den Reaktionsraum (6) der Meßzelle befördert.

## Claims

1. Ion mobility spectrometer (IMS) comprising a measuring cell which consists of a measuring arrangement and a housing (8) which seals the measuring arrangement towards the outside in a gas-tight fashion except for a gas inlet device, wherein the gas inlet device permits flow of an amount of measuring gas molecules (11), which is relatively small compared to the volume of the measuring cell, from the exterior of the housing (8) through a perforated disc (1) of a thickness of ≤ 1mm into the inside of the housing, and wherein a device for producing alternating positive and negative pressure gradients is provided above the holes of the disc (1) on at least one side of the perforated disc (1),
**characterized in that**
the perforated disc (1) consists of a non-porous material of a thickness of between 10µm and 1mm and comprises a plurality of through holes, preferably between 10 and 100 holes per cm², which have a diameter of between 5µm and 50µm, preferably between 10µm and 20µm.

2. Ion mobility spectrometer according to claim 1, **characterized in that** the perforated disc (1) consists of metal, preferably of metal foil or thin sheet metal, e.g. special steel sheet.

3. Ion mobility spectrometer according to any one of the preceding claims, **characterized in that** the device for producing alternating pressure gradients comprises a piezoelectric oscillator for active oscillation incitation of the perforated disc (1).

4. Ion mobility spectrometer according to any one of the preceding claims, **characterized in that** the perforated disc (1) is rigid.

5. Ion mobility spectrometer according to any one of the claims 1 through 3, **characterized in that** the perforated disc (1) is a diaphragm which is connected in a gas-tight fashion to the housing (8) along its circumferential edge and which can oscillate, and that the device for producing alternating pressure gradients comprises a means for active oscillation incitation of the diaphragm.

6. Ion mobility spectrometer according to claim 5, **characterized in that** the device for active oscillation incitation of the diaphragm comprises an electromagnetic oscillator.

7. Ion mobility spectrometer according to claim 6, **characterized in that** the diaphragm comprises preferably in its central region a ferromagnetic section, e.g. a layer (14) of ferritic material which is rigidly disposed on one or both sides of the diaphragm, and that an electrical coil (15) is provided which is preferably rigidly connected to the housing (8) which can be supplied with an electric alternating current and produces a magnetic alternating field which incites oscillations in the diaphragm.

8. Ion mobility spectrometer according to claim 7, **characterized in that** the electrical coil (15) can produce a magnetic alternating field in the kHz region which has a field gradient at the location of the ferromagnetic section of the diaphragm.

9. Ion mobility spectrometer according to claim 5, **characterized in that** the means for active oscillation incitation of the diaphragm functions on a pneumatic basis.

10. Ion mobility spectrometer according to claim 9, **characterized in that** a pump (12) working alternatingly, preferably a diaphragm pump, is provided for circulating a carrier gas (10) provided inside of the housing and that the pump (12) simultaneously serves for pneumatic oscillation incitation of the diaphragm.

11. Ion mobility spectrometer according to claim 10, **characterized in that** the pump (12) can produce alternating pressure gradients in the frequency region between 10Hz and 100Hz, preferably between 30Hz and 40Hz.

12. Ion mobility spectrometer according to any one of the preceding claims, **characterized in that** carrier gas (10) provided in the inside of the housing (8) is permanently circulated and that the gas flow of the circulated carrier gas (10) is directed such that the carrier gas (10) transports the measuring gas molecules (11), which penetrated into the inside of the housing (8) through the perforated disc (1), from the perforated disc (1) into the reaction chamber (6) of the measuring cell.

## Revendications

1. Spectromètre de mobilité ionique (SMI) comportant une cellule de mesuré composée d'un montage de mesure et d'un boîtier (8) qui isole le montage de mesure de l'extérieur en le rendant étanche aux gaz à l'exception d'un dispositif d'entrée de gaz, dans lequel le dispositif d'entrée de gaz laisse passer dans l'intérieur du boîtier, par un disque troué (1) d'une épaisseur ≤ 1 mm, une quantité de molécules de gaz de mesure (11) se trouvant à l'extérieur du boîtier (8) faible par rapport au volume de la cellule de mesure, et dans lequel est prévu un dispositif pour générer, par l'intermédiaire des trous du disque (1), des gradients de pression positifs et négatifs alternants sur au moins un côté du disque troué (1),
**caractérisé par le fait**
**que** le disque troué (1) est fait d'un matériau non poreux d'une épaisseur comprise entre 10 µm et 1 mm et présente un grand nombre de trous traversants, de préférence entre 10 et 100 trous par cm², d'un diamètre compris entre 5 µm et 50 µm, de préférence entre 10 µm et 20 µm.

2. Spectromètre de mobilité ionique selon la revendication 1, **caractérisé par le fait que** le disque troué (1) est fait de métal, de préférence d'une feuille de métal ou d'une tôle fine, par exemple d'une tôle en acier spécial.

3. Spectromètre de mobilité ionique selon l'une des revendications précédentes, **caractérisé par le fait que** le dispositif pour générer des gradients de pression alternants comprend un oscillateur piézoélectrique pour l'excitation en oscillation active du disque troué (1).

4. Spectromètre de mobilité ionique selon l'une des revendications précédentes, **caractérisé par le fait que** le disque troué (1) possède une structure rigide.

5. Spectromètre de mobilité ionique selon l'une des revendications 1 à 3, **caractérisé par le fait que** le disque troué (1) est une membrane oscillante reliée avec le boîtier (8) d'une manière étanche aux gaz le long de son bord périphérique et que le dispositif pour générer des gradients de pression alternants comprend un dispositif pour l'excitation en oscillation active de la membrane.

6. Spectromètre de mobilité ionique selon la revendication 5, **caractérisé par le fait que** le dispositif pour l'excitation en oscillation active de la membrane comprend un oscillateur électromagnétique.

7. Spectromètre de mobilité ionique selon la revendication 6, **caractérisé par le fait que** la membrane présente, de préférence dans sa partie centrale, une section ferromagnétique, par exemple une couche de matériau ferromagnétique (14) appliquée à demeure sur une face ou sur les deux faces de la membrane, et qu'il est prévu une bobine électrique (15), de préférence solidaire du boîtier (8), qui peut être alimentée par un courant électrique alternatif et génère un champ magnétique alternatif qui engendre des oscillations de la membrane.

8. Spectromètre de mobilité ionique selon la revendication 7, **caractérisé par le fait que** la bobine électrique (15) peut générer un champ magnétique alternatif dans la gamme du kHz qui possède un gradient de champ à l'endroit de la section ferromagnétique de la membrane.

9. Spectromètre de mobilité ionique selon la revendication 5, **caractérisé par le fait que** le dispositif pour l'excitation en oscillation active de la membrane fonctionne de manière pneumatique.

10. Spectromètre de mobilité ionique selon la revendication 9, **caractérisé par le fait qu'**il est prévu une pompe (12) fonctionnant de manière alternante, de préférence une pompe à membrane pour la mise en circulation d'un gaz porteur (10) se trouvant à l'intérieur du boîtier, et que la pompe (12) sert en même temps à l'excitation en oscillation pneumatique de la membrane.

11. Spectromètre de mobilité ionique selon la revendication 10, **caractérisé par le fait que** la pompe (12) peut générer des gradients de pression alternants dans une gamme de fréquences comprise entre 10 Hz et 100 kHz, de préférence entre 30 Hz et 40 Hz.

12. Spectromètre de mobilité ionique selon l'une des revendications précédentes, **caractérisé par le fait qu'**un gaz porteur (10) prévu à l'intérieur du boîtier (8) est en circulation permanents et que le flux du gaz porteur (10) mis en circulation est guidé de telle manière que les molécules de gaz de mesure (11) qui ont pénétré à l'intérieur du boîtier (8) à travers le disque troué (1) sont emportées par le gaz porteur (10) du disque troué (1) vers la chambre de réaction (6) de la cellule de mesure.
